(19) Europäisches Patentamt
European Patent Office
Office européen des brevets

(11) **EP 1 364 488 B1**

(12) **EUROPEAN PATENT SPECIFICATION**

(45) Date of publication and mention of the grant of the patent:
**24.09.2008 Bulletin 2008/39**

(21) Application number: **02730633.1**

(22) Date of filing: **26.02.2002**

(51) Int Cl.:
***H04L 12/26*** *(2006.01)* ***H04L 12/24*** *(2006.01)*

(86) International application number:
**PCT/IB2002/002076**

(87) International publication number:
**WO 2002/078261 (03.10.2002 Gazette 2002/40)**

(54) **QUALITY OF SERVICE MONITOR**

ÜBERWACHUNGSEINHEIT ZUR ÜBERWACHUNG DER DIENSTQUALITÄT

MODULE DE SURVEILLANCE DE QUALITÉ DE SERVICE

(84) Designated Contracting States:
**AT BE CH CY DE DK ES FI FR GB GR IE IT LI LU MC NL PT SE TR**

(30) Priority: **28.02.2001 GB 0104973**

(43) Date of publication of application:
**26.11.2003 Bulletin 2003/48**

(73) Proprietor: **Nokia Corporation**
**02150 Espoo (FI)**

(72) Inventor: **RAISANEN, Vilho**
**FIN-00200 Helsinki (FI)**

(74) Representative: **Style, Kelda Camilla Karen**
**Page White & Farrer**
**Bedford House**
**John Street**
**London, WC1N 2BF (GB)**

(56) References cited:

**EP-A- 0 881 799** **EP-A- 1 065 827**
**US-A- 5 922 051** **US-A- 6 108 782**

- **STEVENS ET AL: "TCP/IP ILLUSTRATED, Vol. 1. THE PROTOCOLS" VOL. 1: THE PROTOCOLS, READING, MA: ADDISON WESLEY,US, 1994, pages 85-96, XP002106390 ISBN: 0-201-63346-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 364 488 B1

Printed by Jouve, 75001 PARIS (FR)

## Description

The present invention relates to methods and apparatus for monitoring the transmission of data in a communication system. In particular, but not exclusively, the invention relates to monitoring the integrity of data transmitted between a first and second node of a telecommunication network.

A communication system may provide the user, or more precisely, user equipment or terminal, with connection-oriented communication services and/or connectionless communication services. An example of the first type is a circuit switched connection where a circuit is set-up with call set-up and admission control. An example of a connectionless communication service is a so called packet switched service which is typically used in communications based on the Internet Protocol (IP). Both of the circuit switched and the packet switched services can be used for communicating packet data. Packet data services can be defined in general as services that are capable of transporting data units (data packets or similar data entities of fixed or variable length) between two signaling points, such as between two terminals or other nodes of the communication system.

In a packet switched communication system such as might be based on the Internet protocol (IP), the 'Quality of Service' (QoS), such as end-to-end delays and data packet loses are variable and are of concern. In this sense QoS can be understood as a dynamic term depending upon the circumstances of use but essentially indicating the standards of service provided to a network user.

The variability of such QoS is a handicap when using IP networks for transport of delay-limited signals such as packet video or voice over IP. IP QoS enhancements have therefore been developed. An example of these is Differentiated Services, which provides prioritization for delay-critical streams while maintaining potentially high network utilization levels. However, prioritization-type schemes only provide statistical QoS, and require management of resources to be able to provide high QoS levels for critical signals at high network usage levels.

QoS measurements with simulated media streams provide a way of checking the degree of QoS provided by the IP transport network. A measurement with simulated media stream is performed by transmitting a stream of packets between two measurement points (or nodes) in an IP network in such a way that measurement packet sizes and transmission intervals correspond to an application in question (e.g., Voice over IP codec). Such measurements can be made for networks in production use yielding results that are automatically relevant for a media source having the same flow characteristics (for example IP packet size or transmission interval). Patent application PCT/W001/59921, presents a method for making QoS measurements based on an emulated stream.

These measurements can be used in an IP domain to supervise local QoS which may then be used as a part of an end-to-end QoS calculation. Advanced analysis can thereafter provide information about the network state.

A problem associated with measurements based upon active media streams are that extra bandwidth is required to support the necessary extra data streams and measurements. A further problem is that of the extra processing power which is required to fully analyze the results.

A known document, US5922051, discloses a method for traffic management in a computer network in which in response to a determination that the bad packet frequency rate at a particular node is increasing, the polling rate at which MIB objects are collected from that node is increased by modifying polling values at that node.

It is an aim of embodiments of the present invention to at least partly mitigate the above-mentioned problems.

According to a first aspect of the present invention there is provided a method as defined in claim 1.

According to a second aspect of the present invention, there is provided a system as defined in claim 26.

According to a third aspect of the present invention, there is provided measuring means as defined in claim 29.

This enables a relatively coarse accuracy measurement, which is correspondingly simple to calculate, to be used to monitor data integrity. When the first monitoring mode indicates a potential problem in data transfer a second, more accurate, mode is selected which enables a transmitted data stream to be monitored with greater accuracy.

Embodiments of the present invention will now be described hereinafter by way of example only and with reference to the accompanying drawings in which:

Figure 1 illustrates a communication network;

Figure 2 illustrates a distribution of measurement results; and

Figure 3 shows a flow diagram describing a method for measuring aspects of a data flow.

In the drawings like reference numerals refer to like parts.

In this description a (data) packet or other data unit is a sequence of bits which is typically consecutive. In a data unit the sequence of bits is defined according to the protocol of the data unit. A data stream (or flow) is a sequence of data units such as the data packets that can be categorized according to a well-known criteria, such as source-destination-protocol-ports tuplets (IPv4) or flow identifier (IPv6). The data units in a flow may be consecutive. To give an example, two packets $p_1$ and $p_2$ belong to the same flow. The packets $p_1$ and $p_2$ can be multiplexed with packets q of another flow. The packets $p_1$ and $p_2$ may also be head to tail in the time domain but are still distinguishable as two different packets. This means that packet p1 and p2 cannot be considered as one single packet, even though the consecutive bits belong to the same flow. A data entity or unit may have a variable length (e.g. Internet Protocol data packets) or a fixed length (e.g. ATM cells). In the context of embodiments of the present invention "data" can include voice information as well as or instead of for example conventional data packets.

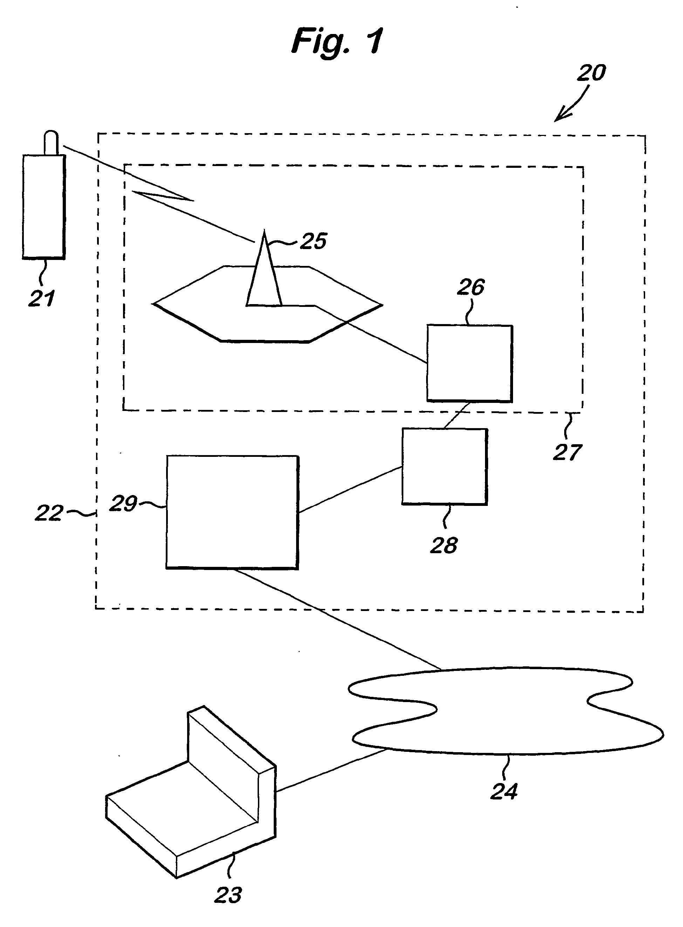

Figure 1 shows a communication system 20 that provides data communication resources embodying the present invention. The communication system is capable of providing wireless data transportation services for a mobile station 21 thereof by means of a public land mobile network (PLMN) 22. Another user 23 is provided with fixed line data services by means of a data network 24. An example of a data network environment where embodiments of the invention may be applied is a server network where data is retrieved from different servers. It should be appreciated that while embodiments of the invention mentioned herein are described in the context of a UMTS (Universal Mobile Telecommunications System) and an Internet Protocol (IP) network, other embodiments of the present invention are applicable to any packet- and cell switched/routed network, independent of transport layer technology, and independent of the architecture (connection-oriented or connectionless) of the system.

The mobile station 21 or other appropriate user equipment is arranged to communicate via the air interface with a base transceiver station 25 of an access entity of the PLMN system 22. It should be appreciated that the term mobile station is intended to cover any suitable type of wireless user equipment, such as portable data processing devices or web browsers as well as mobile telephones or computers. The term "base station" will be used in this document to encompass any element which transmit to and/or receive from wireless stations or the like via the air interface.

The base station 25 is controlled by a radio network controller RNC 26. The radio network controller 26 and the base station 25 belong to a radio network subsystem RNS 27 of a radio access network RAN (e.g. a UTRAN: UMTS Terrestrial RAN). It should be appreciated that a UMTS radio access network is typically provided with more than one radio network controller, and that each radio network controller is arranged generally to control more than one base station 25 although only one base station is shown in Figure 1.

The radio network subsystem 27 is connected to the core network of the PLMN system, e.g. to a SGSN (serving GPRS support node) 28. The SGSN 28 keeps track of the mobile stations location and performs security functions and access control. The SGSN 28 is connected to a GGSN (gateway GPRS support node) 29. The GGSN 29 provides interworking with the other data network 24. The GGSN 29 acts as a gateway between the UMTS network 22 and the other data network 24, which in this example is an IP based data network. The PLMN might also include a home location register (HLR).

Another user terminal 23 is shown connected to the data network 24. The exemplifying arrangement is such that the mobile station 21 and the terminal 23 may communicate via the data networks 22 and 24. However, it should be appreciated that embodiments of the invention may be applied to other types of data communication arrangements as well, such as to an arrangement where the user 21 (or 23) communicates with an element that is implemented within the network 22 (or 24) or to an arrangement where two elements of the network 22 (or 24) communicate data internally within the network.

Although not shown, the data communication system of Figure 1 may also be connected to conventional telecommunications networks, such as to a GSM based cellular public land mobile network (PLMN) or to a public switched telephone network (PSTN). The various networks may be interconnected to each other via appropriate interfaces and/or gateways.

In use, the communication system of Figure 1 can carry various types of communication traffic, including packets of TCP/IP traffic. The nodes of the communication system negotiate for network resources in order to optimize the capacity and performance of the communication network. The mobile station 21 the Radio network controller RNC, the serving GPRS support node 28 and the gateway GPRS support node 29 negotiate a bearer characterized by a quality of Service (QoS) profile.

For example, UMTS quality of service parameters define classes such as "conversational", "interactive" and "background". These classes have different requirements in terms of for example maximum allowed delay, jitter and packet loss tolerances. The maximum throughput rate of a packet is related to maximum allowed bit rate and thus also to the speech code bit rate used. On the other hand in GPRS, quality of service profiles may be defined according to for example precedence class, delay class, reliability class, mean (or peak) throughput class. The precedence class indicates the importance attached to the PDP context by the network operator. For each session a so-called PDP (Packet Data Protocol) context is created. This describes the characteristics of the session. It contains the PDP type (e.g. IPv4), the IP address assigned to the mobile station (e.g. 129.187.222.10), the requested QoS and the address of a GGSN that serves as the access point to the PDN. This context is stored in the MS, the SGSN (serving GPRS support node) and the GGSN (gateway GPRS support node). With an active PDP context the mobile station is 'visible' and is able to send and receive data packets. The delay class indicates the delay tolerance of a packet. The reliability class indicates the maximum number of packets which may be lost. The mean (or peak) throughput class is derived from the negotiates mean (or peak) throughput for the PDP context in question.

Maximum throughput rate parameters are typically based on policing and the shaping functions at the Gateway GPRS support node (GGSN) 29 and/or other considerations. Therefore packets being transferred in the downlink that is, in the direction towards mobile station direction may be dropped at the gateway GPRS support node 29 and/or the serving GPRS support node 28 if the data packet rate exceeds the maximum throughput negotiated.

In addition, an air interface between a base station and a mobile station has a fluctuating data throughput capacity which depends on, for example, radio communication quality and the demand for retransmission of packets. Therefore packets being transferred in the downlink direction may also be dropped at the radio network controller RNC (e.g. if the capacity of the air interface is not sufficient to sustain the required throughput rate). It is also possible for the serving GPRS support node 28 to become overloaded.

In order to maintain QoS at an acceptable level, which may be dependent upon the class of connection as described above, the transfer of data between two nodes in the system is monitored to see how many data packets are lost and/or to see how many data packets in a data stream are delayed and by how much. If too many data packets are dropped classes of communication which have a high reliability requirement cannot be supported. Alternatively if some data packets are unduly delayed some classes of communication which have a low tolerance of delay may not be supported.

Analysis of the integrity of the data transmission between two nodes of the communication system is carried out in two modes of operation. In this sense the integrity of data transmission will be understood to cover data packet loss, delay and any other factors which may have an impact upon the transmission characteristics of data in a data stream.

In a first mode of operation only a simple analysis of transmitted data is made. Normally such relatively course analysis is performed upon samples taken from a data stream. For example data measurements on 1000 data packets may be made to save reporting capacity. Measurements are taken regularly and over relatively long intervals. As an alternative measurements could be taken continuously but at longer inter-packet intervals. If necessary packet analysis can be carried out on simulated media streams. In such situations packet size can be smaller than in real media streams provided the packet transmission interval is realistic. Here the term 'transmission interval' corresponds to the length of the time interval between the transmissions of (first bits of) two adjacent measurement packets. As mentioned above QoS measurements with simulated media streams provide a way of checking the degree of QoS provided by the IP transport network. A measurement with a simulated media stream is performed by transmitting a stream of packets between two measurement points in an IP network in such a way that measurement packet sizes and transmission intervals correspond to an application in question (e.g., Voice over IP codec). Such measurements can be made in networks in production use yielding results that are automatically relevant for a media source with the same flow characteristics (IP packet size, transmission interval). Such measurements can be used in an IP domain to supervise local QoS, which may be used as a part of end-to-end QoS calculation.

During this first mode only one parameter of the data flow is measured by a first measurement means, for example the parameter might be the delay caused to each data packet in the data stream. Under these circumstances it is only necessary to record the number of lost packets in the measurement sample. No detailed analysis need be carried out on this parameter.

In the second mode of operation longer measurements can be performed to get a more accurate assessment of the numbers of lost packets and/or of the number of data packets being delayed during transfer from one node to the other. During this more accurate/detailed mode, measurement can be made with a greater level of accuracy than during the first mode. In addition other QoS characteristics such as delay distribution quantiles, delay jitter and packet loss correlation can be computed to complement delay measurement and packet loss results. The second mode measurements are carried out by second measurement means. It will be understood that this may comprise the same measurement means as the first measurement means or may comprise a separate device.

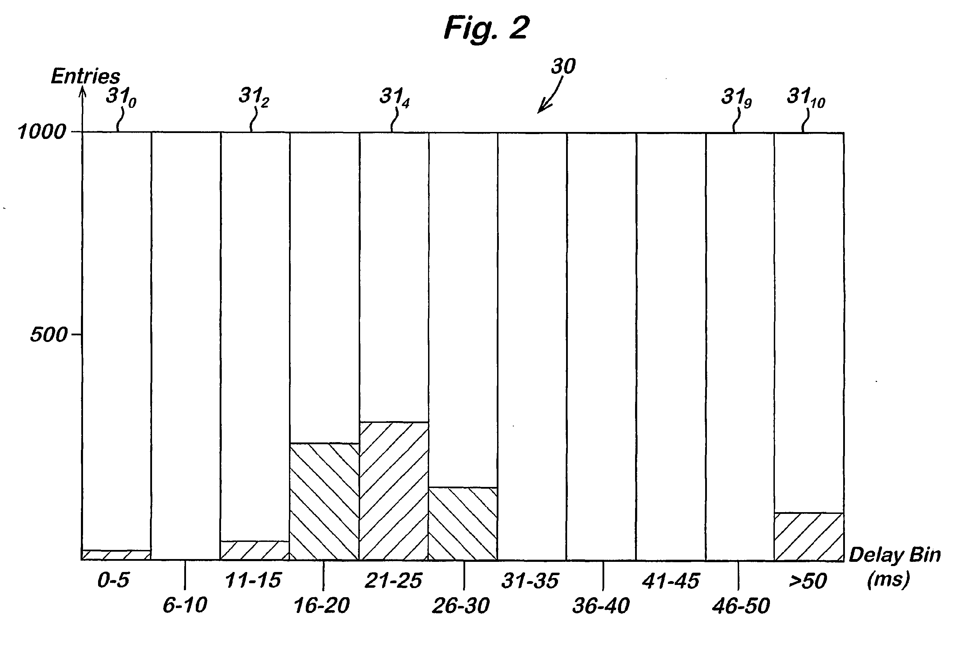

Figure 2 helps illustrate how the criterion for switching from the first to the second mode of operation is monitored. The question of whether or not to switch from the first mode to the second more detailed mode may be based on a time series of network delays. This thus forms the main criterion for switching to the accurate mode which is thus based upon the information content of a delay distribution formed by calculating the delay caused to each data packet in the sample and using these results to form a distribution 30 as seen more clearly in figure 2. The definition of information content (S) of a discrete distribution $\{P_i\}$ is as follows:

$$S = \sum_i P_i \ln \frac{1}{P_i}. \qquad 1.1$$

During the first mode (which is relatively coarse in resolution) possible delays are split into a number of bins

$31_0$ to $31_{10}$. For example, the count in the first of the bins might be incremented by one each time a measured delay of a data packets falls within the ranger 0 to 5ms. Correspondingly, the second bin would have its number of entries incremented by 1 each time the measured delay of a data packets falls within the range of 6 to 10ms. The other bins likewise would have a corresponding range of possible delay so that once an entry has been placed in the distribution for each of the 1000 (for example) samples the number of entries in bin $31_9$ represents the total number of data packets which were delayed by between 46 and 50ms.

The bins 31 are selected so that there are a large enough number of them in a relevant range. For example if there is a target of 50ms on a given route between two nodes of the communication system the range 0ms to 50ms may be divided into the ten bins $31_0$ to $31_9$ shown in figure 2 with a further bin $31_{10}$ for delays exceeding 50ms. Any entry in this bin represents a data packet which was delayed by an unacceptable amount of time. Results are placed in the histogram until entries for all data packets in the sample have been made. The use of this relatively coarse accuracy places relatively little strain upon the hardware and network capacity needed to carry out the measurements and calculations.

The information content of the distribution represented by the resulting histogram may be processed in different ways in order to determine whether the more accurate analysis mode should be implemented.

For example the second mode can be selected once the histogram becomes broad enough. That is to say once a predetermined number of bins of the histogram are non-zero. In the example shown in figure 2 bins $31_0$, $31_2$, $31_3$ and $31_4$ contain entries indicating that delays of undefined duration are affecting some of the data packets. Thereafter mode 2 would be selected to make a more detailed analysis of the spread of results. The spread of results (into at least four bins) also indicates that there is enough delay distribution information for further analysis.

Another possible technique for selecting when to utilize the second mode is to ascertain when a certain predetermined percentage (say 1%) of the measured delays falls within the category 'above delay target' which is represented by entries in the bin $31_{10}$ as having a delay over that of the acceptable 50ms limit. This method has the advantage of being relatively simple to calculate.

The histogram of delays referred to above is updated based on the most recent measurement results so that latest measurement results are taken into account with a suitable weight. For example, the histogram may be built out of N last measurement results and be updated completely every N measurement results.

A further possible technique would be to switch to the second mode when the information content, computed using equation 1.1, becomes large enough. In order to speed up this estimation only most significant bits or two most significant bits can be used in the calculation.

Rather than measure a delay in the data stream other methods according to further embodiments can be used for selecting activation of the second (accurate) mode of operation.

For example instead of measuring delay of data packets lost data packets can be observed instead (or in addition). The second mode can be selected once the number of lost packets exceeds a predefined limit. This limit may be either a number, say 10 data packets, or percentage (say 1%) of the sample. Further, the decision to switch to the second mode may be based on the number of consecutive lost packets.

In accordance with embodiments of the present invention additional measuring streams, comprising data streams for testing purposes only, can be provided in the communication system in addition to the data streams used for the more conventional classes of communication noted above. Such measurement data streams can consist of packets of proprietary measurement format and the first and second monitoring modes can be carried out on these extra data streams. Alternatively according to other embodiments the invention can utilize information from the real time control protocol (RTCP) packets of real media streams. The accurate mode can then be triggered depending upon jitter and/or packet loss information from these RTCP packets.

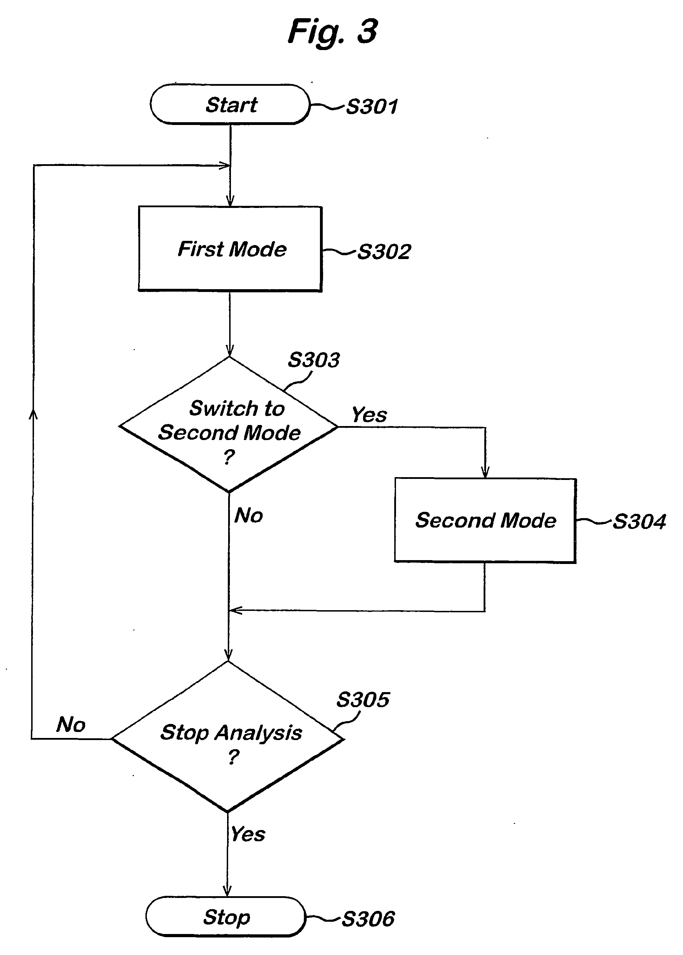

Figure 3 illustrates a flow chart showing the steps according to embodiments of the present invention. At step S301 monitoring of a data stream begins. This monitoring is carried out in accordance with a first mode of operation S0302 which measures some parameter of a data stream transmitted between a first node and second node of a communication system with a first level of accuracy. This first level of accuracy is relatively coarse in the sense that it does not offer detailed analysis of the transmitted data. At step S303 a decision is made whether to switch from this first mode of operation to a second mode of operation. This decision can be made on the basis of, for example, whether a certain percentage of data packets in the data stream are undergoing a delay or, for example, whether the number of data packets being lost from the data stream reaches a predefined limit. Other techniques for assessing whether or not to switch to this second mode of operation have been noted hereinabove in accordance with embodiments of the present invention. If criterion are met to indicate that a more accurate assessment of data transmission is desirable a second mode of operation is selected at step S304. During this second mode of operation parameters of the data transmission are measured with a greater accuracy than is possible during the first mode of operation. In embodiments of the present invention the parameter (s) measured in the second mode of operation will be the same as the parameter measured during the first mode of operation however the measurement will be carried out with greater accuracy. In alternative embodiments the parameter measured during the second mode of operation will be a (possibly additive) separate parameter from that measured in the first mode of operation. For example during the first mode of operation S302 the delay caused to data packets may be measured whilst in the second mode of operation the number of lost data packets is measured. In further embodiments the parameter measured during said second mode of operation may be the same as the parameter measured during the first mode of operation however further measurements will be carried out to measure additional parameters. Using any such method provides for more detailed analysis of how data is being transferred from first to second nodes in the transmission system rather than using the first mode of operation.

At step S305 a decision of whether or not to stop analysis is made. The two measurements modes may have separate or identical rules for assessing whether analysis should be stopped. The decision may be based on a time measurement, for example has measurement occurred for a sufficient length of time, sufficient number of packets, a certain number of packets analyzed, or any other - possibly external - triggering mechanism. If, at step S305, it is indicated that analysis should not be stopped the method reverts to analysis using the relatively course first mode of operation. Thereafter the process is repeated until a 'stop analysis' signal indicates that the signal should be stopped at step S306.

Embodiments of the present invention provide that the second mode of operation measurements can be used for connection admission control in a telecommunication system. That is to say second mode of operation measurements can be used to indicate whether connections between the first and second nodes of a telecommunication system should be blocked on the basis of the measured QoS. The measurement requires some capacity from the telecommunication network that is to say extra hardware is required to carry out the present invention however the benefits such as providing a better CAC estimate provide substantial advantages. Furthermore the provisions of a few extra measuring streams is only a small addition to the multitudes of existing data flows already required in such communication networks.

The computational load required to assess the integrity of data transmitted between two nodes and in accordance with the present invention could be provided in routers of the communication system. However more preferably the analysis could be provided in some other IP-network element so that router loads were not affected.

The scope of the invention is defined by the following claims.

## Claims

**1.** A method of monitoring the transmission of data in a communication network (20, 24) comprising the steps of:

transmitting a stream of data packets from a first node (21) to a second node (23) in the communication network (20, 24); and
in a first mode of operation, measuring with a first level of accuracy, at least a first parameter of said transmitted stream of data; **characterized by**,

responsive to the measured first parameter reaching (S303) a predetermined value, measuring (S304) at least a second parameter of said transmitted stream of data in a second mode of operation having a greater accuracy than said first level of accuracy, said second parameter being a separate parameter from the first parameter.

**2.** The method as claimed in claim 1 further comprising the steps of:

during said first mode measuring a delay in data packets in said data stream, said delay comprising said at least a first parameter.

**3.** The method as claimed in claim 1 further comprising the steps of:

during said first mode, measuring the loss of data packets from said data stream, said loss comprising said at least a first parameter.

**4.** The method as claimed in claim 2 further comprising;

during said first mode observing jitter and/or loss information in real-time control protocol (RTCP) packets in said data stream said delay comprising said at least a first parameter.

**5.** The method according to claim 3 further comprising the steps of:

during said first mode, observing loss percentage in real-time control protocol (RTCP) packets from said data stream, said loss percentage comprising said at least a first parameter.

**6.** The method as claimed in any preceding claim further comprising the steps of:

during said first mode, forming a discrete distribution of results of said measurement of said at least a first parameter and selecting said second mode responsive to a characteristic of said distribution of results reaching a threshold value.

**7.** The method as claimed in claim 6 wherein said distribution of results reaching a threshold value corresponds to the measured first parameter reaching a predetermined value.

**8.** The method as claimed in claims 6 or 7 wherein said step of forming a discrete distribution of results comprises the steps of:

for each measurement result selecting one of a plurality of bins in the discrete distribution, each of said bins representing a sub range in a range of possible measurement results of said at least a first parameter, said selected bin being associated with the sub range containing the measured value of said at least a first parameter for that measurement result.

**9.** The method as claimed in claim 6, 7 or 8 wherein said threshold value corresponds to a predetermined number of bins of the distribution having non-zero entries.

**10.** The method as claimed in any one of claims 6, 7, 8 or 9 further comprising the steps of:

forming said discrete distribution according to the equation;

$$S = \sum_{i} P_i \ln \frac{1}{P_i}.$$

where S is the content of the distribution and $P_i$ is the discrete distribution.

**11.** The method as claimed in any one of claims 6 to 10 further comprising:

varying the sub ranges of bins in said discrete distribution to include one bin for all results over a target measurement value of said first parameter and a plurality of bins dividing the remainder corresponding to measurements falling within a target value.

**12.** The method as claimed in any preceding claim further comprising, during said second mode, the steps of:

measuring said second parameter of said data stream in addition to said first parameter.

**13.** The method as claimed in claim 12 further comprising the steps of:

measuring delay quantiles in addition to said first parameter.

**14.** The method as claimed in claim 12 further comprising the steps of:

measuring delay jitter in addition to said at least one parameter.

**15.** The method as claimed in claim 12 further comprising the steps of:

measuring packet loss correlation in addition to said at least one parameter.

**16.** The method as claimed in any preceding claim wherein said communication network (20, 24) comprises a telecommunication system (20).

**17.** The method as claimed in any preceding claim wherein said communication network (20, 24) comprises an IP transport network (24).

**18.** The method as claimed in any preceding claim further comprising the steps of continuously measuring said first parameter of the data stream with a first level of accuracy until a time when said first parameter reaches the predetermined value.

**19.** The method according to any one of claims 1 to 17 further comprising the steps of measuring said first parameter of the data stream with a first level of accuracy until a time when said first parameter reaches the predetermined value, said measuring being infrequent relative to the measuring of the second parameter.

**20.** The method as claimed in any preceding claim wherein said communication network comprises a packet switched telecommunication system.

**21.** The method as claimed any preceding claim wherein said first mode comprises a normal mode of operation in which measurements are made at regular intervals and long intervals relative to measurements in said second mode of operation.

**22.** The method as claimed in claim 21 wherein said second mode comprises a more accurate mode in which measurements are taken over a longer period of time than in said first mode to thereby achieve a more accurate distribution than in said first mode.

**23.** The method as claimed in any preceding claim further comprising the steps of:

where said data stream comprises the data of a call in progress between said first and second node, dropping said call when said second mode indicates that said first parameter falls below an acceptable threshold.

**24.** The method as claimed in any preceding claim further comprising the steps of:

providing at least one monitor data stream in the communication network (20, 24) in addition to a plurality of data streams used for transferring data between said first and second nodes (21, 23);
monitoring the transmission of data in said monitor data stream; and
responsive to measurements of said first parameter in said at least one monitor data stream assessing the quality of service in said plurality of data streams.

**25.** The method as claimed in any preceding claim further comprising:

measuring said first parameter and said second parameter at said second node.

**26.** A system for monitoring the transmission of data comprising:

a communication network (20, 24) including a first and second node (23, 21) and a transmitter (25) for transmitting a stream of data packets from said first node (23) to the second node (21) and first and second measurement means; wherein

in a first mode of operation the first measurement means measures (S301) , with a first level of accuracy, at least a first parameter of said transmitted stream of data;
**characterised in that,**
responsive to the measurement means indicating that the first parameter has reached (S303) a predetermined value the second measurement means measures at least a second parameter of the transmitted stream of data in a second mode of operation having a greater accuracy than said first level of accuracy, said second parameter being a separate parameter from thefirst parameter.

**27.** The system as claimed in claim 26 wherein said first measuring means comprises said second measuring means.

**28.** The system as claimed in claim 26 wherein said first and second measuring means are disposed at said second node.

**29.** Measurement means for measuring at least two parameters of a stream of data, configured to:

in a first mode of operation, measure(S307), with a first level of accuracy, at least a first parameter of said transmitted stream of data; and

indicate the first parameter reaching (S303) a predetermined value; and

**characterised in that** the measurement means is configured to :

responsive to the first parameter reaching (S303) said predetermined value, measure at least a second parameter of the transmitted stream of data in a second mode of operation having a greater accuracy than said first level of accuracy, said second parameter being a separate parameter from the first parameter.

## Patentansprüche

1. Verfahren zum Überwachen der Übertragung von Daten in einem Kommunikationsnetz (20, 24), welches die Schritte umfasst:

   Übertragen eines Stroms von Datenpaketen von einem ersten Knoten (21) zu einem zweiten Knoten (23) im Kommunikationsnetz (20, 24); und
   Messen in einem ersten Betriebsmodus mit einem ersten Genauigkeitsniveau wenigstens eines ersten Parameters des übertragenen Datenstroms; **gekennzeichnet durch**

   Messen (S304) in Reaktion darauf, dass der gemessene erste Parameter einen vorbestimmten Wert erreicht, wenigstens eines zweiten Parameters des übertragenen Stroms von Daten in einem zweiten, eine größere Genauigkeit als das erste Genauigkeitsniveau aufweisenden Betriebsmodus, wobei der zweite Parameter ein vom ersten Parameter gesonderter Parameter ist.

2. Verfahren gemäß Anspruch 1, welches ferner die Schritte umfasst:

   Messen während des ersten Betriebsmodus einer Verzögerung in Datenpaketen im Datenstrom, wobei die Verzögerung den wenigstens einen ersten Parameter umfasst.

3. Verfahren gemäß Anspruch 1, welches ferner die Schritte umfasst:

   Messen während des ersten Betriebsmodus des Verlusts von Datenpaketen aus dem Datenstrom, wobei der Verlust den wenigstens einen ersten Parameter umfasst.

4. Verfahren gemäß Anspruch 2, welches ferner umfasst:

   Beobachten während des ersten Modus von Jitter- und/oder Verlustinformation in Echtzeitsteuerprotokoll-(RTCP)-Paketen im Datenstrom, wobei die Verzögerung den wenigstens einen ersten Parameter umfasst.

5. Verfahren gemäß Anspruch 3, welches ferner die Schritte umfasst.

   Beobachten während des ersten Modus eines Verlustanteils in Echtzeitsteuerprotokoll-(RTCP)-Paketen aus dem Datenstrom, wobei der Verlustanteil den wenigstens einen ersten Parameter umfasst.

6. Verfahren gemäß einem der vorherigen Ansprüche, welches ferner die Schritte umfasst:

   Bilden während des ersten Modus einer diskreten Verteilung von Ergebnissen der Messung des wenigstens einen ersten Parameters und Auswählen des zweiten Modus in Reaktion darauf, dass ein Merkmal der Verteilung von Ergebnissen einen Schwellwert erreicht.

7. Verfahren gemäß Anspruch 6, wobei die Verteilung von Ergebnissen, die einen Schwellwert erreichen, dem gemessenen ersten Parameter entspricht, der einen vorbestimmten Wert erreicht.

8. Verfahren gemäß Anspruch 6 oder 7, wobei der Schritt des Bildens einer diskreten Verteilung von Ergebnissen die Schritte umfasst:

   Auswählen für jedes Messergebnis eines einer Vielzahl von Behältern in der diskreten Verteilung, wobei jeder der Behälter einen Unterbereich in einem Bereich möglicher Messergebnisse des wenigstens einen ersten Parameters darstellt, wobei der ausgewählte Behälter zum Unterbereich gehört, der den gemessenen Wert des wenigstens einen ersten Parameters für dieses Messergebnis enthält.

**9.** Verfahren gemäß Anspruch 6, 7 oder 8, wobei der Schwellwert einer vorbestimmten Anzahl an Behältern der Verteilung entspricht, die Nicht-Null-Einträge aufweist.

**10.** Verfahren gemäß einem der Ansprüche 6, 7, 8 oder 9, welches ferner die Schritte umfasst.

Bilden der diskreten Verteilung gemäß der Gleichung;

$$S = \sum_i P_i \ln \frac{1}{P_i}.$$

wobei S der Gehalt der Verteilung ist und $P_i$ die diskrete Verteilung ist.

**11.** Verfahren gemäß einem der Ansprüche 6 bis 10, welches ferner umfasst:

Variieren der Unterbereiche von Behältern in der diskreten Verteilung, um einen Behälter für alle Ergebnisse über einen Zielmesswert des ersten Parameters und eine Vielzahl von Behältern, die den Rest entsprechend innerhalb eines Zielwerts fallenden Messungen einteilen, zu umfassen.

**12.** Verfahren gemäß einem der vorgehenden Ansprüche, welches ferner während des zweiten Modus die Schritte umfasst:

Messen des zweiten Parameters des Datenstroms zusätzlich zum ersten Parameter.

**13.** Verfahren gemäß Anspruch 12, welches ferner die Schritte umfasst:

Messen von Verzögerungsquantilen zusätzlich zum ersten Parameter.

**14.** Verfahren gemäß Anspruch 12, welches ferner die Schritte umfasst:

Messen von Verzögerungsjitter zusätzlich zum wenigstens einen Parameter.

**15.** Verfahren gemäß Anspruche 12, welches ferner die Schritte umfasst:

Messen von Paketverlustkorrelation zusätzlich zum wenigstens einen Parameter.

**16.** Verfahren gemäß einem der vorhergehenden Ansprüche, wobei das Kommunikationsnetz (20, 24) ein Telekommunikationssystem (20) umfasst.

**17.** Verfahren gemäß einem der vorhergehenden Ansprüche, wobei das Kommunikationsnetz (20, 24) ein IP-Transportnetz (24) umfasst.

**18.** Verfahren gemäß einem der vorhergehenden Ansprüche, welches ferner die Schritte des kontinuierlichen Messens des ersten Parameters des Datenstroms mit einem ersten Genauigkeitsniveau bis zu einem Zeitpunkt umfasst, an dem der erste Parameter den vorbestimmten Wert erreicht.

**19.** Verfahren gemäß einem der Ansprüche 1 bis 17, welches ferner die Schritte des Messens des ersten Parameters des Datenstroms mit einem ersten Genauigkeitsniveau bis zu einem Zeitpunkt umfasst, an dem der erste Parameter den vorbestimmten Wert erreicht, wobei das Messen relativ zum Messen des zweiten Parameters selten ist.

**20.** Verfahren gemäß einem der vorhergehenden Ansprüche, wobei das Kommunikationsnetz ein paketvermitteltes Telekommunikationssystem umfasst.

**21.** Verfahren gemäß einem der vorhergehenden Ansprüche, wobei der erste Modus einen normalen Betriebsmodus umfasst, bei dem Messungen in regelmäßigen Intervallen und langen Intervallen relativ zu Messungen im zweiten Betriebsmodus gemacht werden.

**22.** Verfahren gemäß Anspruch 21, wobei der zweite Modus einen genaueren Modus umfasst, bei dem Messungen über eine längere Zeitdauer als im ersten Modus vorgenommen werden, um **dadurch** eine genauere Verteilung als im ersten Modus zu erlangen.

**23.** Verfahren gemäß einem der vorhergehenden Ansprüche, welches ferner die Schritte umfasst:

in dem Falle, wo der Datenstrom die Daten eines sich im Gange befindlichen Anrufs zwischen dem ersten und zweiten Knoten umfasst, Fallenlassen des Anrufs, wenn der zweite Modus angibt, dass der erste Parameter unter einen akzeptablen Schwellwert fällt.

**24.** Verfahren gemäß einem der vorhergehenden Ansprüche, welches ferner die Schritte umfasst:

Bereitstellen wenigstens eines Überwachungsdatenstroms im Kommunikationsnetz (20, 24) zusätzlich zu einer Vielzahl von Datenströmen, die zum Übermitteln von Daten zwischen dem ersten und zweiten Knoten (21, 23) verwendet werden;
Überwachen der Übertragung von Daten im Überwachungsdatenstrom; und
Bewerten, in Reaktion auf Messungen des ersten Parameters im wenigstens einen Überwachungsdatenstrom, der Dienstqualität in der Vielzahl von Datenströmen.

**25.** Verfahren gemäß einem der vorhergehenden Ansprüche, welches ferner umfasst:

Messen des ersten Parameters und des zweiten Parameters beim zweiten Knoten.

**26.** System zum Überwachen der Übertragung von Daten, welches umfasst:

ein Kommunikationsnetz (20, 24), welches einen ersten und zweiten Knoten (23, 21) und einen Überträger (25) zum Übertragen eines Stroms von Datenpaketen vom ersten Knoten (23) zum zweiten Knoten (21) umfasst, sowie ein erstes und zweites Messmittel; wobei
in einem ersten Betriebsmodus das erste Messmittel mit einem ersten Genauigkeitsniveau wenigstens einen ersten Parameter des übertragenen Stroms von Daten misst (S301);

**dadurch gekennzeichnet, dass**
in Reaktion darauf, dass das Messmittel angibt, dass der erste Parameter einen vorbestimmten Wert erreicht hat (S303), das zweite Messmittel wenigstens einen zweiten Parameter des übertragenen Stroms von Daten in einem zweiten, eine größere Genauigkeit als das erste Genauigkeitsniveau aufweisenden Betriebsmodus misst, wobei der zweite Parameter ein vom ersten Parameter gesonderter Parameter ist.

**27.** System gemäß Anspruch 26, wobei das erste Messmittel das zweite Messmittel umfasst.

**28.** System gemäß Anspruch 26, wobei das erste und zweite Messmittel beim zweiten Knoten angeordnet sind.

**29.** Messmittel zum Messen wenigstens zweier Parameter eines Stroms von Daten, die konfiguriert sind, um:

in einem ersten Betriebsmodus mit einem ersten Genauigkeitsniveau wenigstens einen ersten Parameter des übertragenen Stroms von Daten zu messen (S301); und
den ersten Parameter, der einen vorbestimmten Wert erreicht (S303), anzugeben; und

**dadurch gekennzeichnet, dass** das Messmittel konfiguriert ist, um:

in Reaktion darauf, dass der erste Parameter den vorbestimmten Wert erreicht (S303), wenigstens einen zweiten Parameter des übertragenen Stroms von Daten in einem zweiten, eine größere Genauigkeit als das erste Genauigkeitsniveau aufweisenden Betriebsmodus zu messen, wobei der zweite Parameter ein vom ersten Parameter gesonderter Parameter ist.

## Revendications

**1.** Procédé de surveillance de la transmission des données dans un réseau de communication (20, 24) comprenant les étapes consistant à :

transmettre un flux de paquets de données d'un premier noeud (21) à un second noeud (23) dans le réseau de communication (20, 24) ; et
dans un premier mode de fonctionnement, mesurer avec un premier niveau de précision, au moins un premier paramètre dudit flux de données transmis ; **caractérisé par**,

en réponse au premier paramètre mesuré atteignant (S303) une valeur prédéterminée, mesurer (S304) au moins un second paramètre dudit flux de données transmis dans un second mode de fonctionnement ayant une précision plus importante que ledit premier niveau de précision, ledit second paramètre étant un paramètre séparé du premier paramètre.

**2.** Procédé selon la revendication 1 comprenant en outre les étapes consistant à :

pendant ledit premier mode mesurant un retard des paquets de données dans ledit flux de données, ledit retard comprend ledit au moins un premier paramètre.

**3.** Procédé selon la revendication 1 comprenant en outre les étapes consistant à :

pendant ledit premier mode, mesurer la perte des paquets de données dudit flux de données, ladite perte comprenant ledit au moins un premier paramètre.

**4.** Procédé selon la revendication 2 comprenant en outre :

pendant ledit premier mode observer une gigue et/ou des informations de perte dans des paquets de protocole de contrôle en temps réel (RTCP) dans ledit flux de données, ledit retard comprenant ledit au moins un premier paramètre.

**5.** Procédé selon la revendication 3 comprenant en outre les étapes consistant à :

pendant ledit premier mode, observer un pourcentage de perte dans les paquets de protocole de contrôle en temps réel (RTCP) dudit flux de données, ledit pourcentage de perte comprenant ledit au moins un premier paramètre.

**6.** Procédé selon l'une quelconque des revendications précédentes comprenant en outre les étapes consistant à :

pendant ledit premier mode, former une distribution discrète des résultats de ladite mesure dudit au moins un premier paramètre et sélectionner ledit second mode en réponse à une caractéristique de ladite distribution des résultats atteignant une valeur de seuil.

**7.** Procédé selon la revendication 6, dans lequel ladite distribution des résultats atteignant une valeur de seuil correspond au premier paramètre mesuré atteignant une valeur prédéterminée.

**8.** Procédé selon la revendication 6 ou 7, dans lequel ladite étape consistant à former une distribution discrète des résultats comprend les étapes consistant à :

pour chaque résultat de la mesure sélectionner un fichier parmi une pluralité de fichiers dans la distribution discrète, chacun desdits fichiers représentant une sous-gamme dans une gamme de résultats de la mesure possibles dudit au moins un premier paramètre, ledit fichier sélectionné étant associé à la sous-gamme contenant la valeur mesurée dudit au moins un premier paramètre pour ce résultat de la mesure.

**9.** Procédé selon la revendication 6, 7 ou 8, dans lequel ladite valeur de seuil correspond à un nombre prédéterminé de fichiers de la distribution ayant des entrées non nulles.

**10.** Procédé selon l'une quelconque des revendications 6, 7, 8 ou 9 comprenant en outre les étapes consistant à :

former ladite distribution discrète selon l'équation :

$$S = \sum_i P_i 1n \frac{1}{Pi}.$$

où S est le contenu de la distribution et $P_i$ est la distribution discrète.

**11.** Procédé selon l'une quelconque des revendications 6 à 10 comprenant en outre :

varier les sous-gammes de fichiers dans ladite distribution discrète pour comprendre un fichier pour tous les résultats sur une valeur de mesure cible dudit premier paramètre et une pluralité de fichiers divisant le reste correspondant aux mesures tombant dans une valeur cible.

**12.** Procédé selon l'une quelconque des revendications précédentes comprenant en outre, pendant ledit second mode, les étapes consistant à :

mesurer ledit second paramètre dudit flux de données en plus dudit premier paramètre.

**13.** Procédé selon la revendication 12 comprenant en outre les étapes consistant à :

mesurer les quantiles de retard en plus dudit premier paramètre.

**14.** Procédé selon la revendication 12 comprenant en outre les étapes consistant à :

mesurer la gigue de retard en plus dudit au moins un paramètre.

**15.** Procédé selon la revendication 12 comprenant en outre les étapes consistant à :

mesurer la corrélation de perte de paquet en plus dudit au moins un paramètre.

**16.** Procédé selon l'une quelconque des revendications précédentes, dans lequel ledit réseau de communication (20, 24) comprend un système de télécommunication (20).

**17.** Procédé selon l'une quelconque des revendications précédentes, dans lequel ledit réseau de communication (20, 24) comprend un réseau de transport IP (24).

**18.** Procédé selon l'une quelconque des revendications précédentes comprenant en outre les étapes consistant à mesurer en continu ledit premier paramètre du flux de données avec un premier niveau de précision jusqu'à un moment où ledit premier paramètre atteint la valeur prédéterminée.

**19.** Procédé selon l'une quelconque des revendications 1 à 17 comprenant en outre les étapes consistant à mesurer ledit premier paramètre du flux de données avec un premier niveau de précision jusqu'à un moment où ledit premier paramètre atteint la valeur prédéterminée, ladite mesure étant peu fréquente par rapport à la mesure du second paramètre.

**20.** Procédé selon l'une quelconque des revendications précédentes dans lequel ledit réseau de communication comprend un système de télécommunication à commutation de paquets.

**21.** Procédé selon l'une quelconque des revendications précédentes dans lequel ledit premier mode comprend un mode de fonctionnement normal dans lequel des mesures sont effectuées à des intervalles réguliers et des intervalles longs par rapport aux mesures dans ledit second mode de fonctionnement.

**22.** Procédé selon la revendication 21 dans lequel ledit second mode comprend un mode plus précis dans lequel des mesures sont prises sur une période de temps plus longue que dans ledit premier mode pour réaliser ainsi une distribution plus précise que dans ledit premier mode.

**23.** Procédé selon l'une quelconque des revendications précédentes comprenant en outre les étapes consistant à :

là où ledit flux de données comprend les données d'un appel en cours entre lesdits premier et second noeuds, abandonner ledit appel lorsque ledit second mode indique que ledit premier paramètre tombe au-dessous d'un seuil acceptable.

**24.** Procédé selon l'une quelconque des revendications précédentes comprenant en outre les étapes consistant à :

fournir au moins un flux de données de surveillance dans le réseau de communication (20, 24) en plus d'une pluralité de flux de données utilisés pour transférer les données entre lesdits premier et second noeuds (21, 23) ;
surveiller la transmission des données dans ledit flux de données de surveillance ; et
en réponse aux mesures dudit premier paramètre dans ledit au moins un flux de données de surveillance, évaluer la qualité de service dans ladite pluralité de flux de données.

**25.** Procédé selon l'une quelconque des revendications précédentes comprenant en outre :

mesurer ledit premier paramètre et ledit second paramètre au niveau dudit second noeud.

**26.** Système de surveillance de la transmission de données comprenant :

un réseau de communication (20, 24) comprenant un premier et un second noeud (23, 21) et un émetteur (25) pour transmettre un flux de paquets de données dudit premier noeud (23) au second noeud (21), et des premier et second moyens de mesure ; dans lequel
dans un premier mode de fonctionnement le premier moyen de mesure mesure (S301), avec un premier niveau de précision, au moins un premier paramètre dudit flux de données transmis ;

**caractérisé en ce que**,
en réponse au moyen de mesure indiquant que le premier paramètre a atteint (S303) une valeur prédéterminée, le second moyen de mesure mesure au moins un second paramètre du flux de données transmis dans un second mode de fonctionnement ayant une précision plus importante que ledit premier niveau de précision, ledit second paramètre étant un paramètre séparé du premier paramètre.

**27.** Système selon la revendication 26, dans lequel ledit premier moyen de mesure comprend ledit second moyen de mesure.

**28.** Système selon la revendication 26, dans lequel lesdits premier et second moyens de mesure sont disposés au niveau dudit second noeud.

**29.** Moyens de mesure servant à mesurer au moins deux paramètres d'un flux de données, configurés pour :

dans un premier mode de fonctionnement, mesurer (S301), avec un premier niveau de précision, au moins un premier paramètre dudit flux de données transmis ; et
indiquer le premier paramètre atteignant (S303) une valeur prédéterminée ; et

**caractérisé en ce que** le moyen de mesure est configuré pour :

en réponse au premier paramètre atteignant (S303) ladite valeur prédéterminée, mesurer au moins un second paramètre du flux de données transmis dans un second mode de fonctionnement ayant une précision plus importante que ledit premier niveau de précision, ledit second paramètre étant un paramètre séparé du premier paramètre.

Fig. 1
20
21
25
26
27
28
29
22
24
23

Fig. 2

30
Entries
$31_0$
$31_2$
$31_4$
$31_9$
$31_{10}$
1000
500
0-5
6-10
11-15
16-20
21-25
26-30
31-35
36-40
41-45
46-50
>50
Delay Bin (ms)

# Fig. 3

Start
S301
First Mode
S302
S303
Switch to Second Mode ?
Yes
Second Mode
S304
No
S305
No
Stop Analysis ?
Yes
Stop
S306

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0159921 A
- US 5922051 A